## Europäisches Patentamt
## European Patent Office
## Office européen des brevets

(11) Veröffentlichungsnummer: **0 142 836**
A2

(12) # EUROPÄISCHE PATENTANMELDUNG

(21) Anmeldenummer: **84113885.2**

(22) Anmeldetag: **16.11.84**

(51) Int. Cl.⁴: **B 62 B 3/10**
**A 47 F 10/04**

(30) Priorität: **18.11.83 DE 3341702**

(43) Veröffentlichungstag der Anmeldung:
**29.05.85 Patentblatt 85/22**

(84) Benannte Vertragsstaaten:
**AT BE CH DE FR GB IT LI LU NL SE**

(71) Anmelder: **Schiele, Albert**
**Himmlingen 36**
**D-7080 Aalen(DE)**

(72) Erfinder: **Schiele, Albert**
**Himmlingen 36**
**D-7080 Aalen(DE)**

(74) Vertreter: **Jackisch, Walter, Dipl.-Ing. et al,**
**Menzelstrasse 40**
**D-7000 Stuttgart 1(DE)**

(54) **Ladevorrichtung.**

(57) Die Ladevorrichtung dient zur Aufbewahrung von Einkaufswagen, Warenträgern und dergleichen, die durch eine Durchführöffnung (17) in einer Seitenwand (23) der Ladevorrichtung gefahren werden. Das Ladegut kann auf einer Auffahrrampe (19) bequem durch die Durchführöffnung (17) in die Aufnahme der Ladevorrichtung gefahren werden. Das in der Ladevorrichtung angeordnete Ladegut läßt sich mit der Ladevorrichtung einfach verfahren.

FIG.1

EP 0 142 836 A2

Patentanwalt
**Dipl.-Ing. W. Jackisch**
Menzelstr. 40, 7000 Stuttgart 1

Herr Albert Schiele
Himmlingen 36

7080  Aalen

**0142836**

A 1-86 489/soo
15.11.1984

## Ladevorrichtung

Die Erfindung betrifft eine Ladevorrichtung nach dem Oberbegriff des Anspruches 1.

Solche Ladevorrichtungen sind beispielsweise Abfallcontainer, die auf der Straße abgestellt werden und zur Aufnahme von Abfällen, Bauschutt, Glas und dergleichen dienen. Die Seitenwände solcher Abfallcontainer umgeben die Aufnahme vollständig und sind so hoch, daß die Abfallprodukte noch über die Seitenwände in den Container geworfen werden können. Zur Aufbewahrung und zum Transport von anderen, keinen Abfall darstellenden Gütern sind diese Ladevorrichtungen jedoch nicht geeignet.

Der Erfindung liegt die Aufgabe zugrunde, eine solche Ladevorrichtung so auszubilden, daß sie in einfacher Weise als Lagerung bzw. Speicherung   von Ladegut verwendet werden kann.

Diese Aufgabe wird erfindungsgemäß mit den kennzeichnenden Merkmalen des Anspruches 1 gelöst.

Durch die Durchführöffnung in der Seitenwand kann das verfahrbare Ladegut einfach in die Ladevorrichtung gefahren werden. Auf der Auffahrrampe läßt sich das Ladegut mühelos in die Ladevorrichtung fahren. Die erfindungsgemäße Ladevorrichtung ist besonders vorteilhaft zur Aufnahme von Ein-

- 2 -

kaufswagen geeignet, wie sie beispielsweise in Kaufhäusern,
Lebensmittelläden und dergleichen verwendet werden.
Insbesondere bei Großhandelshöfen tritt das Problem auf,
daß nach Geschäftsschluß eine große Zahl von Einkaufswagen
zusammengestellt werden müssen. Sie müssen darüber hinaus
gegen Wegrollen gesichert werden. Mit der erfindungsgemäßen
Ladevorrichtung läßt sich dies nunmehr in einfacher Weise
durchführen. Die Einkaufswagen werden über die Auffahrrampe nacheinander in die Ladevorrichtung gefahren. Sie
lassen sich dadurch sehr einfach sammeln und aufbewahren.
In der Ladevorrichtung können die zusammengestellten Einkaufswagen auch mühelos verfahren werden. Die Einkaufswagen
lassen sich mit der erfindungsgemäßen Ladevorrichtung geordnet zusammenstellen, wobei gleichzeitig die Einkaufswagen gegen Wegrollen gesichert sind.

Weitere Merkmale der Erfindung ergeben sich aus den weiteren
Ansprüchen, der Beschreibung und den Zeichnungen.

Die Erfindung wird anhand einiger in den Zeichnungen dargestellter Ausführungsformen näher erläutert. Es zeigen

Fig. 1        in Seitenansicht eine erste Ausführungsform
              einer erfindungsgemäßen Ladevorrichtung,

Fig. 2        eine Vorderansicht der Ladevorrichtung gemäß
              Fig. 1,

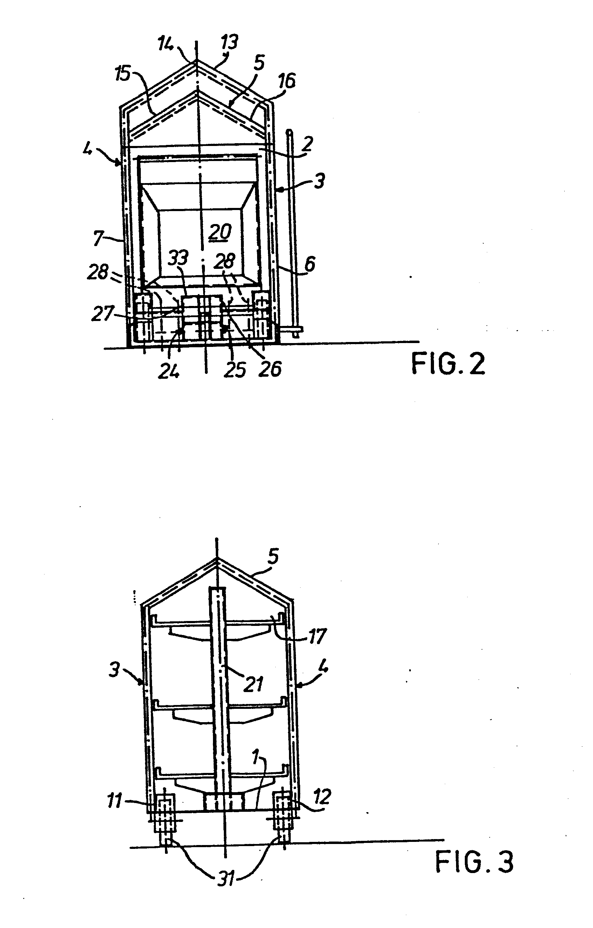

Fig. 3        eine Rückansicht der Ladevorrichtung gemäß
              Fig. 1,

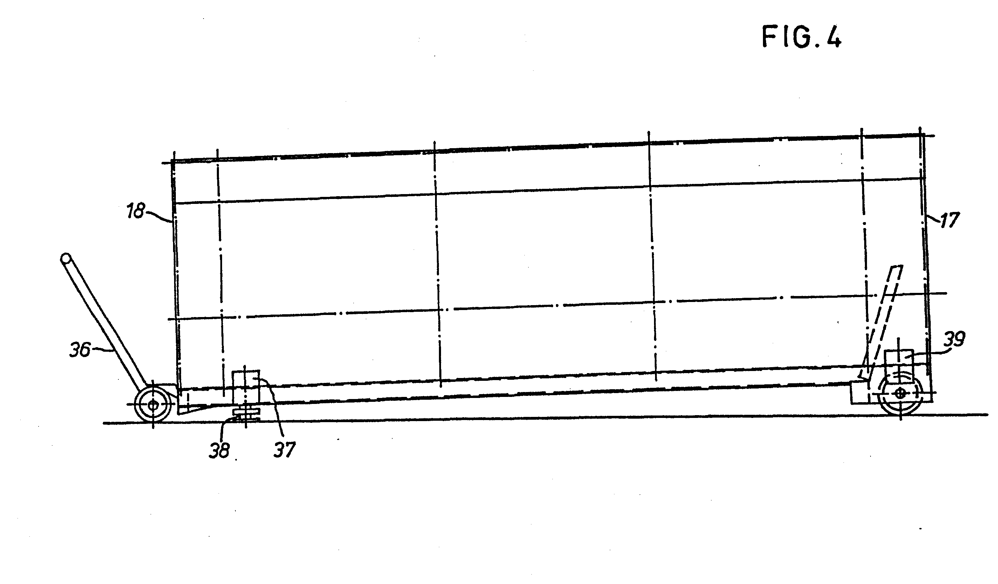

Fig. 4        in Seitenansicht eine zweite Ausführungsform
              einer erfindungsgemäßen Ladevorrichtung,

_3_
_- 4 -_

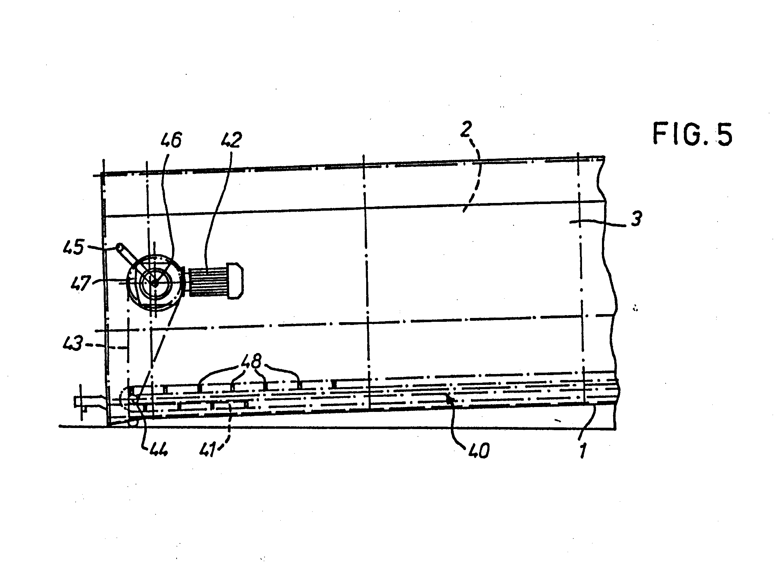

Fig. 5  in Seitenansicht einen Teil einer dritten
Ausführungsform einer erfindungsgemäßen Ladevorrichtung.


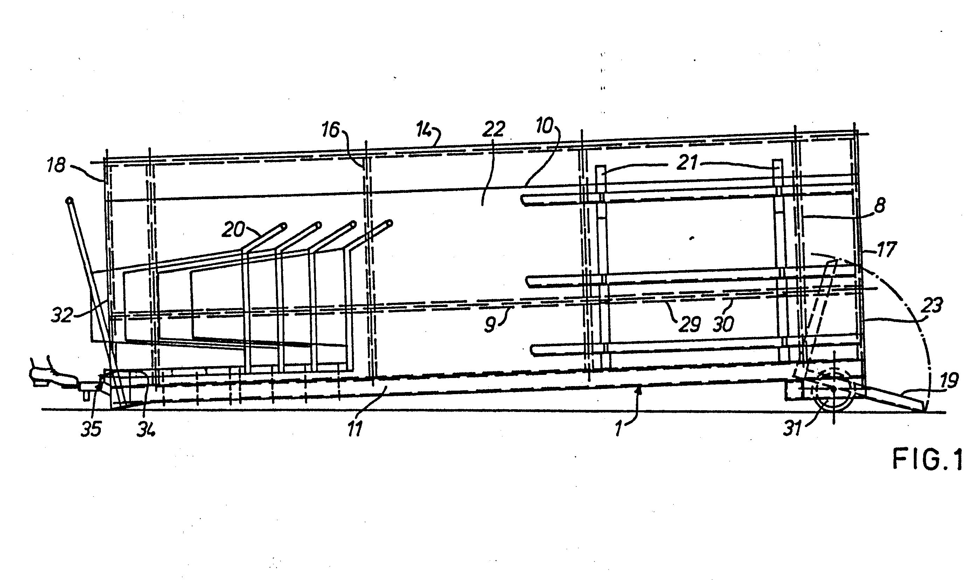

Die Ladevorrichtung gemäß den Fig. 1 bis 3 hat einen Bodenteil 1, der vorzugsweise als Platte ausgebildet ist, so
daß die Ladevorrichtung nach unten vollständig geschlossen
ist. Der Bodenteil 1 hat rechteckigen Umriß und begrenzt
einen Aufnahmeraum 2 nach unten, der außerdem von Längsseitenwänden 3 und 4 begrenzt ist. Sie sind gleich lang und
gleich hoch und werden durch eine Abdeckung 5 miteinander
verbunden, die im Ausführungsbeispiel dachförmig ausgebildet
ist. Die Längsseitenwände 3, 4 weisen jeweils ein Rahmengestell 6 und 7 auf. Jedes Rahmengestell besteht aus aufwärts gerichteten Trägern 8, die mit Abstand in Längsrichtung der Ladevorrichtung angeordnet sind, und aus Querträgern 9 und 10, mit denen die Träger 8 verbunden sind.
Die Querträger 9, 10 liegen parallel zueinander sowie senkrecht zu den Trägern 8. Der Querträger 9 liegt in der
unteren Hälfte der Längsseitenwände 3, 4, während der Querträger 10 an der Übergangsstelle zur Abdeckung 5 liegt. Die
Träger 8 sind mit ihren unteren Enden an einem aufwärts
gerichteten Längsrand 11 und 12 des Bodenteiles 1 befestigt
(Fig. 3). Auch die Abdeckung 5 weist ein Rahmengestell 13
auf, das mit einem Längsträger 14 versehen ist, der in der
Kante der dachförmigen Abdeckung angeordnet ist. Er ist
durch Querstreben 15, 16 mit den oberen Querträgern 10 der
Längsseitenwände 3, 4 verbunden. Die Querstreben 15, 16
liegen jeweils in einer Ebene mit den Trägern 8.


An beiden Enden der Ladevorrichtung begrenzen die endseitigen Träger 8 der Längsseitenwände 3 und 4, die endseitigen Querstreben 15 und 16 der Abdeckung 5 sowie die

_- & -_

Enden des Bodenteiles 1 eine Durchführöffnung 17 und eine
Auslaßöffnung 18. Im Bereich der Durchführöffnung 17 ist
eine Auffahrrampe 19 vorgesehen, über die Einkaufswagen 20
in den Aufnahmeraum 2 der Ladevorrichtung gefahren werden
können. Die Auffahrrampe 19 ist vorzugsweise mit der Ladevorrichtung verbunden, so daß sie im Bedarfsfalle jederzeit zur Verfügung steht. Sie kann in eine die Durchführöffnung 17 wenigstens teilweise verschließende Sperrstellung
verstellt werden (vgl. strichpunktierte Linien in Fig. 1).
In dieser Sperrlage sichert die Auffahrrampe 19 die im
Aufnahmeraum 2 untergebrachten Einkaufswagen 20. Zweckmäßig ist die Auffahrrampe 19 schwenkbar an der Ladevorrichtung angeordnet, so daß sie in einfacher Weise aus
ihrer Betriebsstellung in ihre Sperrstellung verstellt
werden kann. In der Sperrstellung selbst ist die Auffahrrampe 19 in geeigneter Weise gesichert. In der Sperrstellung bildet die Auffahrrampe 19 eine die Durchführöffnung 17 verschließende Rückwand, durch die der Aufnahmeraum 2 rückseitig abgeschlossen ist. Sind im Aufnahmeraum
2 die Einkaufswagen 20 untergebracht, dann reicht es aus,
wenn die Auffahrrampe 19 in Sperrstellung lediglich über
einen Teil der Höhe des Aufnahmeraumes reicht, wie Fig. 1
zeigt. Dann können die Einkaufswagen 20 nicht unbeabsichtigt
aus dem Aufnahmeraum herausgefahren werden. Selbstverständlich kann die Auffahrrampe 19 auch so lang sein, daß
sie bis zur Abdeckung 5 reicht, so daß die Auffahrrampe
in der Sperrstellung die gesamte Durchführöffnung 17 verschließt. Eine solche Ausbildung der Auffahrrampe ist vorzugsweise dann vorzusehen, wenn das im Aufnahmeraum 2 untergebrachte Ladegut gegen unbefugten Zugriff gesichert werden
soll. Im Aufnahmeraum 2 können anstelle der Einkaufswagen
20 beispielsweise auch Warenträger 21 für jede Art von Ware
untergebracht werden, wie zum Beispiel für Textilien, für
Obst und dergleichen.

Da die Längsseitenwände 3, 4 und die Abdeckung 5 jeweils
aus einem Rahmengestell 6, 7, 13 bestehen, hat die Ladevorrichtung verhältnismäßig geringes Gewicht, so daß sie
ohne Schwierigkeiten transportiert werden kann. Die Rahmengestelle verleihen darüber hinaus der Ladevorrichtung eine
ausreichende Steifigkeit. Wenn das Ladegut empfindlich ist
oder gegen Schmutz, gegen Regen, Schnee und dergleichen geschützt werden muß, wird auf die Rahmengestelle 6, 7, 13
eine Abdeckplane 22 gelegt, die in geeigneter Weise an den
Längsseitenwänden 3, 4 befestigt wird. Die im Aufnahmeraum
2 untergebrachten Einkaufswagen 20 sind dadurch insbesondere
vor Zutritt von Wasser, Schnee und dergleichen geschützt.
Die Ladevorrichtung mit der Abdeckplane 22 selbst kann im
Freien stehen, so daß für sie kein gesonderter Unterstellplatz erforderlich ist. Da auch der Bodenteil 1 geschlossen
ist, sind die Einkaufswagen 20 optimal geschützt.

Die Durchführöffnung 17 ist an der Rückseite 23 der Ladevorrichtung vorgesehen, die eine Schmalseite bildet. Da
somit die an die Rückseite 23 anschließenden Seitenwände 3,
4 die Längsseiten der Ladevorrichtung bilden, lassen sich
die Einkaufswagen 20 und die Warenträger 21 über die Auffahrrampe 19 sehr einfach in den Aufnahmeraum 2 verfahren. Die
Längsseitenwände 3, 4 liegen in Einführrichtung der Einkaufswagen 20, so daß sie nach Eintritt in den Aufnahmeraum 2
lediglich in dessen Längsrichtung verfahren werden müssen.
Die Ladevorrichtung ist verhältnismäßig lang, so daß eine
größere Zahl von Einkaufswagen 20 im Aufnahmeraum 2 untergebracht werden kann. Beispielsweise ist die Ladevorrichtung
so lang, daß zwanzig bis vierzig Einkaufswagen 20 im Aufnahmeraum 2 vorgesehen werden können. Die Breite des Aufnahmeraumes 2 ist nur wenig größer als die Breite der Einkaufswagen 20 bzw. der Warenträger 21, so daß während des
Transports der Ladevorrichtung das Ladegut quer zur Längsrichtung des Aufnahmeraumes nur wenig Bewegungsspiel hat.

Damit die Einkaufswagen 20 im Aufnahmeraum 2 beim Verfahren ausgerichtet werden können, so daß sie ohne Schwierigkeiten ineinander geschoben werden können, weist der Bodenteil 1 mittig eine in Längsrichtung verlaufende Führung 24 auf. Sie wird vorzugsweise durch einen über den Boden 1 ragenden Vorsprung gebildet, der sich vorteilhaft über nahezu die ganze Länge des Bodenteiles 1 erstreckt. Dadurch können die Einkaufswagen 20 über ihren gesamten Fahrweg im Aufnahmeraum geführt werden. Die Führung kann auch durch mehrere in Längsrichtung des Aufnahmeraumes hintereinander angeordnete Führungsteile gebildet sein. Bei einer konstruktiv einfachen, leicht herzustellenden Ausführung wird die Führung durch eine im Querschnitt U-förmige Schiene 25 gebildet, deren Schenkel 26, 27 in Richtung auf den Boden 1 verlaufen und auf diesem befestigt sind. Die Breite der Führungsschiene 25 ist nur geringfügig kleiner als der Abstand der Laufräder 28 der Einkaufswagen 20.

Zusätzlich zur bodenseitigen Führung 24 sind im Aufnahmeraum 2 an den Längsseitenwänden 3 und 4 weitere, in Längsrichtung verlaufende Seitenführungen 29 und 30 für das Ladegut 20, 21 vorgesehen. Diese Seitenführungen haben Abstand vom Bodenteil 1 und liegen auf gleicher Höhe. Sie werden vorzugsweise durch Stangen gebildet, welche die Einkaufswagen 20 beim Einfahren in den Aufnahmeraum 2 zusätzlich zur bodenseitigen Führung 24 seitlich führen. Vorteilhaft werden diese Seitenführungen 29, 30 durch den unteren Querträger 9 der Längsseitenwände 3, 4 gebildet, so daß für die Seitenführungen keine gesonderten Teile erforderlich sind. Diese Querträger 9 können geringfügig nach innen versetzt angeordnet sein, so daß sie in den Aufnahmeraum 2 ragen und die Einkaufswagen 20 auf Abstand zu den Längsseitenwänden 3, 4 halten.

In der Beladestellung (Fig. 1) ist die Ladevorrichtung schräg nach unten geneigt. Dies wird dadurch erreicht, daß sie im Bereich der Rückseite 23 auf wenigstens zwei Laufrädern 31 abgestützt ist, während sie an der Vorderseite 32 mit ihrem Bodenteil 1 unmittelbar auf dem Untergrund aufliegt. Die über die Auffahrrampe 19 in den Aufnahmeraum 2 geschobenen Einkaufswagen 20 rollen daher auf dem Bodenteil 1 nach vorn bis zur Auslaßöffnung 18. Die bodenseitige Führung 24 und die Seitenführungen 29, 30 stellen hierbei sicher, daß die Einkaufswagen zuverlässig selbsttätig nach vorne fahren, ohne im Aufnahmeraum hängen zu bleiben. Auf diese Weise können die Einkaufswagen 20 nacheinander in den Aufnahmeraum 2 geschoben werden, wobei sie dann selbsttätig ineinander geschoben werden, wie dies in Fig. 1 in der linken Hälfte dargestellt ist. Damit die Einkaufswagen 20 beim Einfahren in den Aufnahmeraum 2 durch die bodenseitige Führung 24 nicht behindert werden, verlaufen die Schenkel 26 und 27 der Führungsschiene 25 im Bereich der Einführöffnung 17 konvergierend. Der Quersteg 33 der Führungsschiene 25 ist in diesem Bereich entsprechend in der Breite verringert, so daß die Führung 24 im Bereich der Durchführöffnung 17 in Form einer Spitze ausgebildet ist.,

Damit die Einkaufswagen 20 nicht unbeabsichtigt durch die Auslaßöffnung 18 gelangen können, ist in ihrem Bereich ein Anschlag 34 für die Einkaufswagen vorgesehen. Damit sie durch den Auslaß 18 herausgefahren werden können, kann der Anschlag 34 aus dem Bewegungsweg der Einkaufswagen 20 entfernt werden. Vorzugsweise ist der Anschlag 34 verschwenkbar angeordnet, so daß er in einfacher Weise zum Herausziehen der Einkaufswagen weggeschwenkt werden kann. Zur Verstellung des Anschlages 34 ist eine Handhabe 35 vorgesehen, die in Längsrichtung der Ladevorrichtung über die bodenseitige Führung 24 aus der
Auslaßöffnung 18 ragt (Fig. 1). Dadurch kann die Handhabe
35 bequem betätigt werden. Sie ist an der bodenseitigen
Führung 24 gelagert und zweckmäßig als verschwenkbarer
Tritthebel ausgebildet. Der Anschlag 34 kann daher lediglich durch Niedertreten der Handhabe 35 aus dem Bewegungsweg der Einkaufswagen 20 geschwenkt werden, so daß sie
bequem     dem Aufnahmeraum 2 der Ladevorrichtung entnommen
werden können. Da die Handhabe 35, wie Fig. 1 zeigt, aus
dem Aufnahmeraum 2 ragt, kann sie ohne Mühe erreicht und
gedrückt werden. Der Bewegungsweg der Handhabe 35 in Aufwärtsrichtung ist begrenzt. Dadurch kann sie als Anschluß
für einen in Fig. 4 dargestellten Handroller 36 verwendet
werden, mit dem die Ladevorrichtung im Bereich der Vorderseite 32 angehoben werden kann. Der Handroller 36 ist hierzu in bekannter Weise mit einem (nicht dargestellten) Hubteil versehen, der an der Unterseite der Handhabe 35 angreift und mit dem durch Verschwenken des Handrollers die
Ladevorrichtung angehoben werden kann. Die Handhabe 35 kann
darüber hinaus als Einhängeöse ausgebildet sein, so daß
die Ladevorrichtung an ein Zugfahrzeug angehängt werden
kann.

Damit die Einkaufswagen 20 einfach aus dem Aufnahmeraum 2
herausgefahren werden können, ist der Bodenteil 1 im Bereich
der Auslaßöffnung 18 nach unten abgeschrägt, so daß der
Bodenteil 1 an diesem Ende in der Beschickungsstellung gemäß
Fig. 1 bis zum Untergrund reicht, so daß die Einkaufswagen
20 mühelos herausgezogen und auf den Untergrund gefahren
werden können.

Bei der in Fig. 4 dargestellten Ausführungsform ist im
Bereich des Auslasses 18 eine Höhenverstellvorrichtung 37
vorgesehen, mit der der Bodenabstand des Bodenteiles 1 im
Bereich der Auslaßöffnung eingestellt werden kann. Dadurch kann die Ladevorrichtung in unterschiedliche Neigungslagen
eingestellt werden. Die Höhenverstellvorrichtung 37 kann
hydraulisch oder mechanisch oder   hydromechanisch arbeiten
und hat einen auf dem Untergrund aufliegenden Stützteil 38.
Die Ladevorrichtung weist auch im Bereich der Durchführöffnung 17 eine derartige Höhenverstellvorrichtung 39 auf.
Mit den beiden Höhenverstellvorrichtungen 37, 39 läßt sich
die Schräglage des Bodenteiles 1 so einstellen, daß die
Einkaufswagen 20 in gewünschtem Maße selbsttätig nach vorn
bis zum Anschlag 34 rollen. Im übrigen ist die Ladevorrichtung gemäß Fig. 4 gleich ausgebildet wie die vorige Ausführungsform.

Bei der Ausführungsform gemäß Fig. 5 ist im Bereich des
Bodenteiles 1 eine Transportvorrichtung 40 für das Ladegut
vorgesehen. Sie ist vorzugsweise im Bereich neben der bodenseitigen Führung 24 angeordnet und weist vorzugsweise einen
endlos umlaufenden Transportteil 41 auf, der ein Band oder
eine Kette sein kann. Vorzugsweise wird ein Transportband
verwendet, da es eine geringere Geräuschentwicklung hat als
eine Transportkette. Der Transportteil 41 ist mit
Mitnehmern 48 versehen, mit denen die Einkaufswagen 20 im Aufnahmeraum 2 beim Umlauf des Transportteiles
mitgenommen werden können. Bei Verwendung der Transportvorrichtung  40 muß die Ladevorrichtung am vorderen Ende nicht
nach unten abgesenkt werden; vielmehr kann der Bodenteil 1
horizontal verlaufen.

Zum Antrieb der Transportvorrichtung 40 ist ein Motor 42
vorgesehen, der zweckmäßig geschützt im Aufnahmeraum 2 untergebracht und an einer der Längsseitenwände 3, 4 gelagert ist.
Der Motor 42 treibt über einen Riemen-oder Kettentrieb 43
eine Antriebswelle 44 an, die quer zu den Längsseitenwänden
3, 4 liegt. Über die Antriebswelle 44 ist der Transportteil 41 geführt, der im Bereich der in Fig. 5 nicht dargestellten Durchführöffnung 17 über eine weitere Welle oder Trommel geführt ist.

Anstelle des Motors 42 kann auch eine in Fig. 5 angedeutete Kurbel 45 vorgesehen sein, mit der die Transportvorrichtung 40 mechanisch betätigt wird. Die Kurbel 45 dient dann zum Drehen einer Antriebswelle 46, die senkrecht zu den Längsseitenwänden 3, 4 liegt und auf der eine Riemenscheibe oder ein Kettenrad 47 sitzt. Durch Drehen mit der Kurbel 45 kann die Antriebswelle 44 über den Trieb 43 gedreht werden, so daß die Einkaufswagen 20 im Aufnahmeraum 2 transportiert werden.

Es ist schließlich möglich, zur Betätigung der Transportvorrichtung 40 eine Münzeinrichtung zu verwenden. So wird die Transportvorrichtung 40 nur dann in Gang gesetzt, wenn ein entsprechender Geldbetrag vom Kunden in die Münzeinrichtung eingeworfen worden ist. In diesem Falle wird der Anschlag 34 erst nach Einwerfen eines bestimmten Geldbetrages in die Münzeinrichtung weggeschwenkt und mittels der Transportvorrichtung ein Einkaufswagen aus dem Aufnahmeraum 2 herausgefahren.

Die Rahmengestelle 6, 7, 13 und der Bodenteil 1 können aus jedem geeigneten Werkstoff hergestellt sein, wie aus Edelstahl, Aluminium und dergleichen. Die Auffahrrampe 19 ist in der Sperrstellung vorzugsweise verschließbar und kann als Diebstahlsicherung verwendet werden. Die Handhabe 35 ist vorzugsweise so ausgebildet, daß sie für jeden Wagentyp paßt, so daß die Ladevorrichtung an die unterschiedlichsten Wagen angehängt werden kann. Die Abdeckplane 22 kann aus jedem geeigneten Werkstoff bestehen und beispielsweise durch eine LKW-Plane und dergleichen gebildet sein. Die Größe des Aufnahmeraumes 2 richtet sich nach der Größe des unterzubringenden Ladegutes. Auch kann die Ladevorrichtung bei
allen beschriebenen Ausführungsformen auch aus zwei oder
mehreren nebeneinanderliegenden Aufnahmeräumen bestehen, die
jeweils durch eine in Längsrichtung der Ladevorrichtung verlaufende Zwischenwand voneinander getrennt sind. Dann kann
eine größere Zahl von Einkaufswagen 20 in der Ladevorrichtung untergebracht werden.

Die Einkaufswagen 20 sind im Aufnahmeraum 2 witterungsgeschützt untergebracht und lassen sich in der Ladevorrichtung
sehr einfach transportieren. Die Abdeckplane 22 kann als
Werbefläche benutzt werden. Als Ladegut sind nicht nur
Einkaufswagen oder Warenträger geeignet. Im Aufnahmeraum
können auch Warenauslagen für Sonderverkäufe und ähnliches
nach Geschäftsschluß untergebracht und abgestellt werden.
Insbesondere bei Einkaufswagen tritt bisher das Problem auf,
daß sie unbeabsichtigt wegrollen und in der Nähe geparkte
Fahrzeuge beschädigen können. Dies ist mit der Ladevorrichtung
ausgeschlossen.

Dipl.-Ing. W. Jackisch
Menzelstr. 40, 7000 Stuttgart 1

Herrn Albert Schiele
Himmlingen 36

7080 Aalen

**0142836**

A 1-86 489/soo

15.11.1984

## ANSPRÜCHE

1. Ladevorrichtung mit mindestens einer Aufnahme, die durch wenigstens zwei Seitenwände und einen Bodenteil begrenzt ist,
   dadurch gekennzeichnet, daß in wenigstens einer der Seitenwände (23) eine Durchführöffnung (17) vorgesehen ist, in deren Bereich eine Auffahrrampe (19) für Ladegut (20,21) vorgesehen ist.

2. Ladevorrichtung nach Anspruch 1,
   dadurch gekennzeichnet, daß die Auffahrrampe (19) in eine die Durchführöffnung (17) wenigstens teilweise verschliessende Sperrstellung verstellbar, vorzugsweise verschwenkbar ist.

3. Ladevorrichtung nach Anspruch 1 oder 2,
   dadurch gekennzeichnet, daß die Auffahrrampe (19) in Sperrstellung wenigstens einen Teil der die Durchführöffnung (17) aufweisenden Seitenwand (23) bildet, vorzugsweise sich über wenigstens etwa die halbe Höhe der Ladevorrichtung erstreckt.

4. Vorrichtung nach einem der Ansprüche 1 bis 3,
   dadurch gekennzeichnet, daß Längsseitenwände (3,4) der Ladevorrichtung jeweils ein Rahmengestell (6,7) aufweisen.

5. Ladevorrichtung nach einem der Ansprüche 1 bis 4,
   dadurch gekennzeichnet, daß die Längsseitenwände (3,4) durch eine vorzugsweise ein Rahmengestell (13) aufweisende Abdeckung (5) der Aufnahme (2) miteinander verbunden sind.

-2-

6. Ladevorrichtung nach Anspruch 5,
   dadurch gekennzeichnet, daß die Rahmengestelle (6,7,13)
   als Auflage für eine Abdeckplane (22) vorgesehen sind.

7. Ladevorrichtung nach einem der Ansprüche 1 bis 6,
   dadurch gekennzeichnet, daß der Bodenteil (1) vorzugsweise mittig eine in Längsrichtung verlaufende
   Führung (24) für das Ladegut (20,21) aufweist.

8. Ladevorrichtung nach Anspruch 7,
   dadurch gekennzeichnet, daß die Führung (24) durch einen
   über den Bodenteil (1) ragenden länglichen Vorsprung
   gebildet ist, der sich vorteilhaft über nahezu die
   ganze Länge des Bodenteils erstreckt.

9. Ladevorrichtung nach Anspruch 6 oder 7,
   dadurch gekennzeichnet, daß die Führung (24) durch eine
   im Querschnitt U-förmige Schiene (25) gebildet ist, die
   vorzugsweise mit den freien Enden ihrer Schenkel (26,27)
   auf dem Bodenteil (1) befestigt ist.

10. Ladevorrichtung nach einem der Ansprüche 1 bis 9,
    dadurch gekennzeichnet, daß sie für das Ladegut (20,21)
    einen der Durchführöffnung (17) gegenüberliegenden
    Auslaß (18) aufweist, in dessen Bereich der Bodenteil (1)
    vorzugsweise nach unten abgeschrägt ist.

11. Ladevorrichtung nach einem der Ansprüche 1 bis 10,
    dadurch gekennzeichnet, daß an den Längsseitenwänden
    (3,4) in Längsrichtung verlaufende Seitenführungen
    (29,30) für das Ladegut (20,21) vorgesehen sind, die
    vorzugsweise durch Stangen gebildet sind.

12. Ladevorrichtung nach Anspruch 10 oder 11,
    dadurch gekennzeichnet, daß im Bereich des Auslasses (18) ein Anschlag (34) für das Ladegut (20,21) vorgesehen ist, der aus dem Bereich des Ladegutes (20,21) entfernbar, vorzugsweise verschwenkbar ist.

13. Ladevorrichtung nach Anspruch 12,
dadurch gekennzeichnet, daß der Anschlag (34) auf der bodenseitigen Führung (24), vorzugsweise auf deren Quersteg (33), vorgesehen ist.

14. Ladevorrichtung nach Anspruch 12 oder 13,
dadurch gekennzeichnet, daß der Anschlag (34) mit einer Handhabe (35) verstellbar ist, die vorzugsweise in Längsrichtung über die bodenseitige Führung (24) aus dem Auslaß (18) ragt und an der bodenseitigen Führung (24) gelagert ist.

15. Ladevorrichtung nach Anspruch 14,
dadurch gekennzeichnet, daß die Handhabe (35) als verschwenkbarer Tritthebel ausgebildet ist.

16. Ladevorrichtung nach Anspruch 14 oder 15,
dadurch gekennzeichnet, daß die Handhabe (35) als Anschluß für einen Handroller (36) ausgebildet ist.

17. Ladevorrichtung nach einem der Ansprüche 1 bis 16,
dadurch gekennzeichnet, daß wenigstens im Bereich des Auslasses (18), vorzugsweise auch im Bereich der Durchführöffnung (17), eine Höhenverstellvorrichtung (37,39) vorgesehen ist, mit der der Bodenabstand der Ladevorrichtung einstellbar ist.

18. Ladevorrichtung nach einem der Ansprüche 1 bis 17,
dadurch gekennzeichnet, daß im Bereich des Bodenteiles (1) eine Transportvorrichtung (40) für das Ladegut (20,21) vorgesehen ist, die vorzugsweise im Bereich neben der bodenseitigen Führung (24) angeordnet ist.

0142836

19. Ladevorrichtung nach Anspruch 18,
dadurch gekennzeichnet, daß die Transportvorrichtung (40) einen endlos umlaufenden Transportteil (41) aufweist, der mit Mitnehmern (48)
für das Ladegut (20,21) versehen ist.

20. Ladevorrichtung nach Anspruch 18 oder 19,
dadurch gekennzeichnet, daß die Transportvorrichtung (40) über eine Münzeinrichtung betätigbar ist.

Herrn Albert Schiele
Himmlingen 36

7080 Aalen

1/4

A 1-86 489/50
15.11.1984
0142836

FIG.1

Herr Albert Schiele
Himmlingen 36

7080 Aalen

A 1-80 430/sc
15.11.1984

0142836

FIG.2

FIG.3

Herr Albert Schiele
Himmlingen 36
7080 Aalen

# FIG.4

18

17

36

39

38    37

3/4

A 1-86 489/so
014836

Herr Albert Schiele
Himmlingen 36

7080 Aalen

A 1-86 489/so
15.11.1984
0142836

FIG.5